Europäisches Patentamt

European Patent Office

Office européen des brevets

(11) Publication number: **0 229 704 B1**

# EUROPEAN PATENT SPECIFICATION

(45) Date of publication of patent specification: **28.08.91**  (51) Int. Cl.5: **G21C  17/10**

(21) Application number: **87300209.1**

(22) Date of filing: **09.01.87**

(54) Thimble guide assembly.

(30) Priority: **10.01.86 US 817703**

(43) Date of publication of application:
**22.07.87 Bulletin  87/30**

(45) Publication of the grant of the patent:
**28.08.91 Bulletin  91/35**

(84) Designated Contracting States:
**BE CH ES FR GB IT LI**

(56) References cited:
**DE-A- 2 832 122**
**FR-A- 2 483 671**

(73) Proprietor: **WESTINGHOUSE ELECTRIC COR-
PORATION**
**Westinghouse Building Gateway Center**
**Pittsburgh Pennsylvania 15222(US)**

(72) Inventor: **Merkovsky, Daniel**
**2034 McKinney Road**
**Monroeville, PA 15146(US)**
Inventor: **Schwirian, Richard Earl**
**333 Toura Drive**
**Pittsburgh, PA 15236(US)**

(74) Representative: **van Berlyn, Ronald Gilbert**
**23, Centre Heights**
**London, NW3 6JG(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a guide for directing a thimble into a fuel assembly in a nuclear power plant, and more particularly, to a thimble guide the length of which can be readily changed.

A typical pressurized water reactor includes a reactor vessel which contains nuclear fuel, a coolant (water) which is heated by the nuclear fuel, and means for monitoring and controlling the nuclear reaction. The reactor vessel is cylindrical, and is provided with a hemispherical bottom and a hemispherical top which is removable. Hot water is conveyed from and returned to the vessel by a reactor coolant system which includes one or more reactor coolant loops (usually three or four loops, depending upon the power-generating capacity of the reactor). Each loop includes a pipeline to convey hot water from the reactor vessel to a steam generator, a pipeline to convey the water from the steam generator back to the reactor vessel, and a pump. The steam generator is essentially a heat exchanger which transfers heat from the reactor coolant system to water from a source that is isolated from the reactor coolant system; the resulting steam is conveyed to a turbine to generate electricity. During operation of the reactor, the water within the vessel and the coolant system is maintained at a high pressure to keep it from boiling as it is heated by the nuclear fuel.

Nuclear fuel is supplied to the reactor incorporated in fuel assemblies. Each fuel assembly includes a base element called a bottom nozzle and a bundle of fuel rods and tubular guides which are supported on the bottom nozzle. The fuel rods have cylindrical housings which are filled with pellets of fissionable material enriched with U-235. The tubular guides accommodate measuring instruments and movably mounted control rods of neutron-absorbing material. A typical fuel assembly for a pressurized water reactor is about 4.1 meters long, about 19.7 centimeters wide, and has a mass of about 585 kg, and a typical four loop reactor might contain 196 such fuel assemblies supported parallel to one another on a core plate within the reactor vessel. After a service life during which the U-235 enrichment of the fuel assemblies is depleted, the reactor is shut down, the pressure within the vessel is relieved, the hemispherical upper cap of the vessel is removed, and the old fuel assemblies are replaced by new ones.

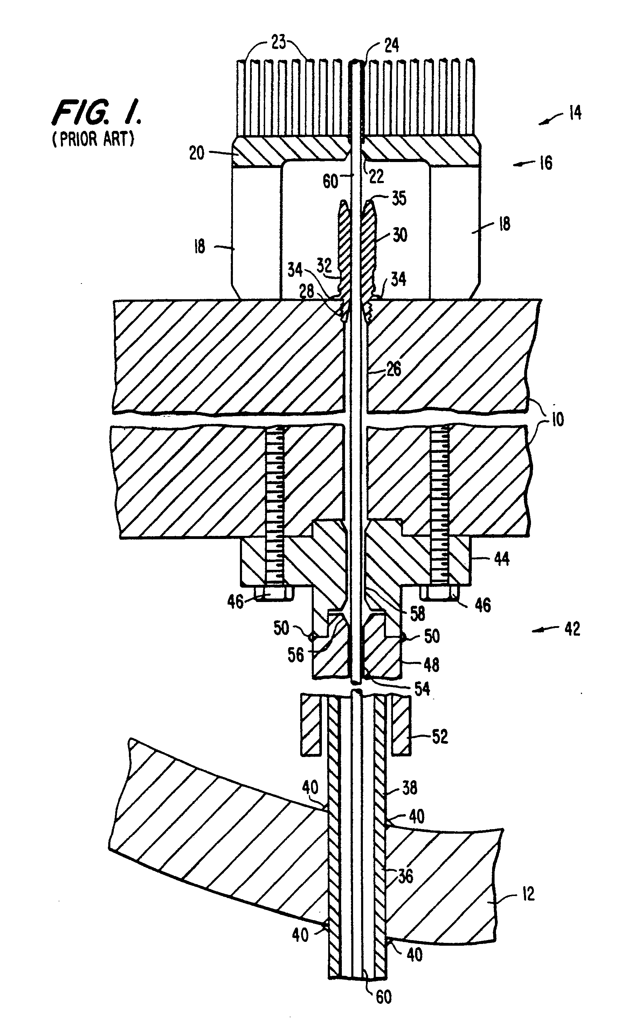

Measuring instruments are employed to promote safety and to permit proper control of the nuclear reaction. Among other measurements, a neutron flux map is generated periodically, such as every 28 days, using data gathered by neutron flux detectors which are moved through a number of randomly selected fuel assemblies. To guide the flux detectors during their periodic journeys, closed stainless steel tubes known as flux thimbles extend through the bottom of the reactor vessel and into the fuel assemblies which have been selected as measuring sites. This will now be explained in more detail with reference to Figure 1 illustrating a conventional flux-thimble guide arrangement.

As seen from Figure 1, a core plate 10 about 44.5 cm thick is horizontally mounted within a reactor vessel, a wall portion of which, located at the hemispherical bottom end cap of the vessel, is shown at 12. The plate 10 supports a plurality of fuel assemblies, a lower portion of one of which is shown at 14 so including a bottom nozzle 16 having four legs 18 which are joined to a platform 20 having a central aperture 22 therein. Supported on the platform 20 are fuel rods 23 and an instrumentation tube 24 which is aligned with the aperture 22 and extends to the top nozzle (not illustrated) of the fuel assembly 14.

A passage 26 having a threaded region 28 extends through the core plate 10 in axial alignment with the aperture 22. A thimble guide 30 is provided which has a threaded portion and a recessed wrench-receiving region 32 which permits technicians to screw the guide 30 into the threaded region 28 of the passage 26 during the assembly of the reactor. After the guide 30 is threadedly attached in this manner, welds 34 are added for additional security. Typically, the guide 30 may project 8.58 cm above the upper surface of the plate 10, and there is a gap of 3.48 cm between the upper lip 35 of the guide and the aperture 22 in the bottom nozzle 16.

A passage 36 extends through the wall 12 of the reactor vessel in axial alignment with the passage 26. A vessel-penetration sleeve 38 having an outer diameter of about 3.81 cm extends through passage 36 and is welded at 40 to the vessel wall 12 to provide a seal which is resistant to high pressure. A bottom-mounted instrumentation column 42, mounted on the plate 10 extending between the passage 26 and the sleeve 38, comprises a fitting 44 which is secured to the plate 10 by bolts 46, an upper pipe element 48 which is joined to the fitting 44 by welds 50, and a lower pipe element 52 which is joined coaxially to the pipe element 48 at a tie plate (not illustrated). The lower pipe element 52 has an inner diameter of 5.08 cm so that there is a gap between it and the sleeve 38.

In a typical four-loop pressurized water reactor having 196 fuel assemblies 14, 58 of the fuel assemblies 14 would be randomly selected for neutron flux monitoring. Accordingly, in such a reactor, there would be 58 thimble guides 30 each communicating with a vessel-penetration sleeve, such as sleeve 38, through a respective passage 26 and bottom mounted instrumentation column 42. During fabrication, sleeves 38 would be installed in the reactor vessel wall 12 and guides 30 and bottom mounted instrumentation columns 42 would be installed on core plate 10, the columns 42 being secured to one another by tie plates (not illustrated). Then the core plate 10 and attached structures would be lowered into the vessel, with the sleeves 38 fitting into elements 52. In the resulting structure, the upper ends (not illustrated) of sleeves 38 are spaced apart from the lower ends (not illustrated) of upper pipe elements 48, so that sleeves 38 are not in fluid-tight communication with bottom mounted instrumentation columns 42.

The bore 54 of upper pipe element 48 typically has a diameter of 1.189 cm and terminates in a flared region 56. The bore 58 of fitting 44 is typically 1.73 cm in diameter and has flared regions at either end. The bore 26 typically has a diameter of 1.91 cm. It should be noted that the channel provided by bores 54, 58, and 26 becomes progressively wider from upper pipe element 48, to fitting 44, to bore 26. This construction facilitates manufacture of the reactor and provides guidance for thimble 60 while avoiding the possibility that it might become stuck in the channel.

Thimble 60 is a long stainless steel tube which begins at a plate (known as a seal table, not illustrated) outside the reactor vessel and which has a closed end (not illustrated) that is normally disposed inside a fuel assembly. Thimble 60 slidably extends through tube 24, guide 30, bore 26, bottom-mounted instrumentation column 42, and sleeve 38. A stainless steel guide tube (not illustrated) is welded to the outer end of sleeve 36, and thimble 60 extends within the guide tube to the seal table which is typically located in a shielded position near the top of the reactor vessel. Since the interior of the reactor vessel is in fluid communication with the interior of sleeve 38, it will be apparent that the guide tube provides a pressure boundary which extends around thimble 60 from wall 12 to the seal table, where a high pressure seal (not illustrated) is provided between the inner wall of the guide tube (not illustrated) and the outer wall of thimble 60. The net result is that thimble 60 provides a low-pressure access channel into the reactor from a shielded position outside of the reactor.

A flux detector (not illustrated), about 5 cm long, is slidably accommodated within thimble 60 and is attached to a flexible push-pull cable (not illustrated) which extends through thimble 60 to flux-mapping equipment (not illustrated) located beyond the seal table. At periodic intervals, typically once every 28 days, the flux detectors are pushed to the tops of thimbles 60 and are then slowly withdrawn through the fuel assemblies 14 as flux measurements are taken at different heights to provide a neutron flux map of the interior of the reactor.

Normally, the thimbles 60 remain inserted in the instrumentation tubes 24 of the randomly selected fuel assemblies 14 between the periodic flux mapping operations. Thimbles 60 must be withdrawn from fuel assemblies 14, however, at intervals of 12-18 months when the reactor is shut down for refueling and fuel shuttling. During the refueling operation, the nuclear reaction is terminated, the pressure within the reactor vessel is relieved, and the guide tubes (not illustrated) are unsealed from the thimbles 60 at the seal table (not illustrated). The thimbles 60 (which are somewhat flexible) are then withdrawn a distance of about 4.27 meters to free them from the spent fuel assemblies 14, which are thereupon removed via remote control and replaced with fresh fuel assemblies 14. Thimbles 60 are then driven into the fresh fuel assemblies 14, the reactor vessel and seal table are sealed, and power generation begins anew.

The conventional arrangement described above with reference to Figure 1 has certain shortcomings. Thus, it has been found that considerable turbulence exists during operation of a reactor in the region between the core plate 10 and the platform portions 20 of fuel assemblies 14. The conventional thimble guides 30 expose a significant portion of each thimble 60 to this turbulence, causing the thimbles 60 to vibrate and increasing wear. Simply increasing the length of guides 30 would be undesirable because fuel assembly designs, including the lengths of legs 18, may change. Since the guides 30 are permanently installed at the time the reactor is built, any particular length for guides 30 selected at that time might make it impossible to take advantage of future design improvements in fuel assemblies. Furthermore, it has been found that fluid flow in the gaps around thimbles 60 due to the progressively widening channels from elements 48 to fittings 44 to bores 26 is sufficient to cause vibration which increases wear. Finally, the flared regions at the upper lips 35 appear to increase turbulence.

It is the principal object of the invention to overcome these drawbacks associated with the conventional flux-thimble guide, and the invention accordingly resides in a thimble guide assembly for receiving an elongate thimble which is inserted into a nuclear fuel assembly through a passage in a reactor core plate supporting the fuel assembly, through a space between the core plate and a bottom nozzle of the fuel assembly, and through an aperture formed in the bottom nozzle in axial alignment with the passage in the core plate, characterized by (A) an elongate first element which has a thimble channel axially extending therethrough and includes connecting means for fixedly mounting the first element on said core plate such that the first element projects from the core plate into said space and has its thimble channel axially aligned with the passage in the core plate; and (B) a second element which has a thimble channel extending therethrough and includes connecting means for removably connecting the second element to said first element such that it forms an axial extension thereof and has its thimble channel axially aligned with the thimble channel of the first element, said second element having an axial dimension causing its distal end to be axially spaced from said aperture of the bottom nozzle a predetermined distance when the thimble guide assembly is mounted on the core plate.

A preferred embodiment of the invention will now be described, by way of example only, with reference to the accompanying drawings, in which:

Figure 1 is a sectional view, partially broken away, of the arrangement utilizing a conventional thimble guide, as discussed above;

Figure 2 is a sectional view, partially broken away of a similar arrangement but employing a flux-thimble guide assembly embodying the invention;

Figure 3 is a top plan view of a lower spring clip forming part of the assembly illustrated in Figure 2;

Figure 4 is a top plan view of a modified lower spring clip;

Figure 5 is a top plan view of a further modification of the lower spring clip;

Figure 6 is a perspective view of an upper spring clip forming part of the assembly shown in Figure 2; and

Figure 7 is a top plan view of another modification of the thimble guide assembly shown in Figure 2.

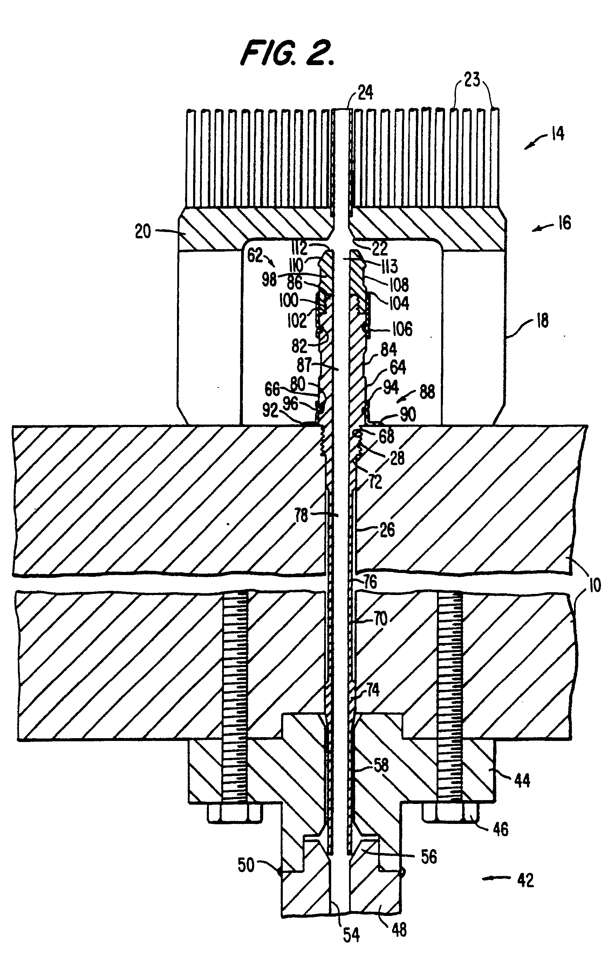

In Figure 2, wherein fuel assembly 14, core plate 10, and bottom-mounted instrumentation column 42 are the same as the corresponding parts previously discussed herein with reference to Figure 1, the thimble guide assembly 62 embodying the invention comprises a first or lower element 64 and a second or upper element 98. The first or lower element 64 of the assembly 62 includes a projecting portion 66 which extends from the upper surface of the core plate 10, a right-hand threaded portion 68 enabling the element 64 to be screwed into the threaded region 28 of bore 26, and a lower sleeve portion 70 which extends from the threaded portion 68 to the flared region 56 of the upper pipe element 48. Sleeve portion 70 is provided with an upper annular shoulder 72 which frictionally engages the bore 26 near its upper end, and a lower annular shoulder 74 which frictionally engages bore 26 adjacent its lower end, the region 76 between the shoulders 72 and 74 being spaced from the wall of the bore 26. Sleeve portion 70 provides a uniformly dimensioned flow path 78 between the upper pipe element 48 and the projecting portion 66 even if the bores 54, 58, and 26 have different diametrical dimensions, as in Fig. 1. The uniformity of the flow path 78 reduces flow-induced vibration, thus wear of the thimble, such as thimble 60 (Fig. 1), extending therethrough. Region 76 is spaced from the wall of the bore 26 in order to reduce the force necessary to insert the lower element 64 during installation thereof.

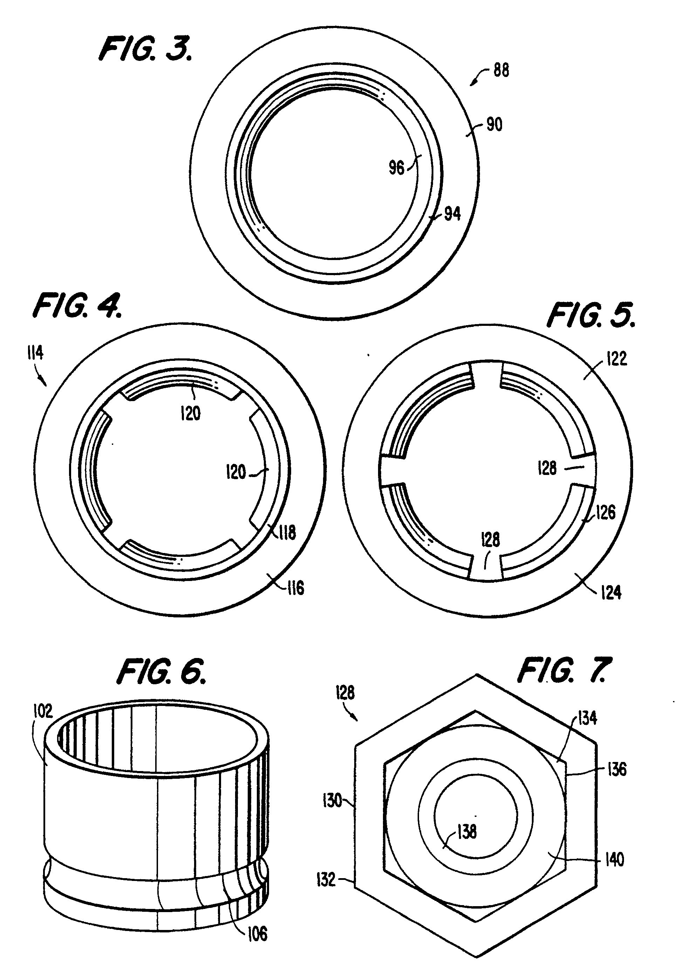

Likewise as seen from Figure 2, the projecting portion 66 is provided with lower and upper annular recesses 80 and 82, a recessed wrench-engaging region 84, and a left-hand threaded sleeve 86. An axial passage 87 through the projecting portion 66 is an extension of the flow path 78 through the sleeve portion 70. A lower spring clip 88 (also see Figure 3) has a flange portion 90 which is spot-welded at 92 to the core plate 10, and has a sleeve portion 94 with an annular inward protrusion 96 which snaps into the recess 80 of the projecting portion 66.

The second or upper element 98 of the thimble guide assembly 62 has a threaded region 100 which screws onto the threaded sleeve 86 of the lower element 64. Upper spring clip 102 (see also Figure 6) is spot-welded at 104 to element 98, and is provided with an annular inward protrusion 106 which snaps into the annular recess 82 of the lower element 64. Above the recessed wrench-engaging region 108, the element 98 terminates in sloping shoulders 110 and a flat annular lip 112. The plane of lip 112 is perpendicular to the longitudinal axis of the cylindrical thimble channel 113 extending through the assembly 62. The squared-off configuration at the top of the upper element 98, in contrast to the sloping recess at the upper lip 35 of the thimble guide 30 shown in Figure 1, minimizes the turbulence created by fluid discharge.

During the assembly of a reactor, first, the upper element 98 of the thimble guide assembly 62, having the desired length is screwed onto the lower element 64 and is tightened thereon by means of wrenches applied to regions 84 and 108. Spring clips 88 and 102 are then forced onto the elements 64 and 98 until their annular protrusions 96 and 106 snap into place, whereupon welds are formed at 104 to complete the assembly 62. Then, the lower sleeve portion 70 is forced into a bore 26 of the core plate 10 until the threaded portion 68 engages the threaded portion 28, whereupon the assembly 62 is tightened by means of a wrench applied to region 84 and welds 92 then are formed.

It will be apparent from Figure 2 that the space between the upper tip, i.e., lip 112, of the guide assembly 62 and the aperture 22 is considerably less than the space between the upper tip, i.e. lip 35, of the thimble guide 30 and the aperture 22 in Fig. 1, so that the assembly 62 is more effective in shielding the thimble 60 from turbulence. The distance between the lip 112 and the aperture 22 preferably is less than about 2.54 cm and may be as small as 0.64 cm. Since the thimble guide assembly 62 is made of the two elements 64 and 98 screwed together, it can be readily adapted for use with different fuel assembly designs simply by selecting an upper element 98 of the appropriate length. More important, the upper element 98 can be exchanged subsequently, if necessary, to compensate for a change in the length of the legs 18 resulting from substitution of a new fuel assembly during refueling. Such exchange is accomplished, after the removal of the spent fuel assembly 14, by means of a remotely controlled tool inserted into the reactor vessel and applied to the region 108 on the upper element 98, and then operated to unscrew the latter which thereafter is replaced with a new one in the same manner. The fact that there are right-hand threaded connections between the plate 10 and the lower element 64 and a left-hand threaded connection between the elements 64 and 98 precludes the possibility of both elements becoming separated from the core plate 10 when the upper element 98 is being unscrewed from the lower element 64.

The spring clips 88 and 102 prevent the elements 64 and 98 from becoming unscrewed inadvertently during operation of the reactor due to vibration. The use of spring clips 88 and 102 is preferred but is not essential. Spring clip 102 may have a slot through it to facilitate installation and, similarly, spring clip 88 may have a slot through flange 90 and sleeve portion 94. Other alternatives for the spring clip 88 are illustrated in Figures 4 and 5. In Figure 4, lower spring clip 114 comprises a flange portion 116 and a sleeve portion 118 having several protrusions 120 instead of the single annular protrusion 96 illustrated in Figure 3. In Figure 5, lower spring clip 122 comprises a flange portion 124 and several sleeve portions 126 separated from each other by slots 128 and each having a protrusion.

While the assembly 62 in Figure 2 employs recessed wrench-engaging regions 84 and 108, other means may be provided for tightening the upper and lower elements. For example, the thimble guide assembly 128 shown in Figure 7 includes a first or lower element 130 having a protruding wrench-engaging region 132, and an upper element 134 having a protruding wrench-engaging region below planar annular lip 138 and sloping shoulders 140. Wrench-engaging regions 132 and 136, which protrude by different distances, facilitate the use of remote-control machinery if upper element 134 is to be replaced after the reactor has been in use. It will be apparent that other alternatives to the Figure 2 embodiment, including tool-engaging radial or axial slots in the outer surfaces of the upper and lower elements, or a multi-sided cavity at the opening of the upper element to accommodate an allen-wrench type tool, could be used instead.

## Claims

1. A thimble guide assembly (62; 128) for receiving an elongate thimble which is inserted into a nuclear fuel assembly (14) through a passage (26) in a reactor core plate (10) supporting the fuel assembly, through a space between the core plate and a bottom nozzle (16) of the fuel assembly, and through an aperture (22) formed in the bottom nozzle in axial alignment with the passage in the core plate, characterized by -
   (A) an elongate first element (64; 130) which has a thimble channel (87) axially extending therethrough and includes connecting means (68) for fixedly mounting the first element (64; 130) on said core plate (10) such that the first element projects from the core plate into said space and has its thimble channel (87) axially aligned with the passage (26) in the core plate; and
   (B) a second element (98; 134) which has a thimble channel (113) extending therethrough and includes connecting means (100) for removably connecting the second element (98; 134) to said first element (64; 130) such that it forms an axial extension thereof and has its thimble channel (113) axially aligned with the thimble channel (87) of the first element, said second element (98; 134) having an axial dimension causing its distal end to be axially spaced from said aperture (22) of the bottom nozzle a predetermined distance when the thimble guide assembly is mounted on the core plate (10).

2. A thimble guide assembly according to claim 1, characterized in that said predetermined distance is substantially from 0.64 cm to 2.54 cm.

3. A thimble guide assembly according to claim 1 or 2, characterized in that said passage (26) through the core plate (10) has a threaded region (28), and said connecting means (68) of the first element (64; 130) comprises a threaded portion thereof adapted to be threadedly engaged with said threaded region (28) of the passage (26).

4. A thimble guide assembly according to claim 3, characterized in that said first element (64; 130) has an additional threaded portion (86) cooperable with the connecting means (100) of the second element (98; 134), said connecting means (100) of the second element comprising a threaded portion of the latter adapted to be threadedly engaged with said additional threaded portion of the first element.

5. A thimble guide assembly according to claim 4, characterized in that the threaded portions (68, 86) of the first element are threaded in opposite directions with respect to each other.

6. A thimble guide assembly according to any one of the preceding claims, characterized in that said first and second elements (64,98; 130,134) have formed thereon tool-engaging regions (84,108; 132,136) adapted to be engaged with turning tools.

7. A thimble guide assembly according to any one of the preceding claims, characterized in that said first element (64; 130) includes a sleeve portion (70) which forms a tubular axial extension of the first element of sufficient length to extend through said passage (26) in the core plate (10).

8. A thimble guide assembly according to claim 7, characterized in that said sleeve portion (70) protrudes from said passage (26) and extends into a bottom-mounted instrumentation column (42) secured to the core plate (10) and communicating with said passage.

9. A thimble guide assembly according to claim 7 or 8, characterized in that said sleeve portion (70) has an outer diameter smaller than the inner diameter of said passage (26) through the core plate, and has at least one annular shoulder (72,74) formed on the outer periphery thereof and dimensioned to engage the wall of said passage (26).

10. A thimble guide assembly according to claim 9, characterized in that said sleeve portion (70) has two annular shoulders (72,74) formed on the outer periphery thereof in axially spaced relationship with respect to each other and dimensioned to engage the wall of said passage (26).

11. A thimble guide assembly according to any one of the preceding claims, characterized in that said first element has an annular groove (82) formed in the outer periphery thereof , and said second element has affixed thereto a spring clip (102) adapted to interlock with said annular groove (82) upon connection of the second element to the first element.

12. A thimble guide assembly according to claim 11, characterized in that said first element (64; 130) has an additional annular groove (80) formed in the outer periphery thereof, and has associated therewith an additional spring clip (88; 114; 122) which is affixed to said core plate (10) and adapted to separable interlock with said additional annular groove (80) when the first element is mounted on the core plate.

13. A thimble guide assembly according to any one of the preceding claims, characterized in that said second element (98; 134), at the distal end thereof, is tapered and terminates in a flat annular lip (112; 138) extending in a plane perpendicular to the longitudinal axis of the thimble channel (113) through the second element.

## Revendications

1. Agencement (62; 128) de guidage de doigt de gant pour recevoir un doigt de gant allongé qui est introduit dans un assemblage combustible nucléaire (14) à travers un passage (26) d'une plaque (10) de coeur de réacteur supportant l'assemblage combustible, à travers un espace entre la plaque de coeur et un embout inférieur (16) de l'assemblage combustible, et à travers un orifice (22) ménagé dans l'embout inférieur et aligné axialement avec le passage de la plaque de coeur, caractérisé par -
    (A) un premier élément allongé (64; 130) à travers lequel s'étend axialement un canal (87) de doigt de gant et qui comporte un moyen de liaison (68) pour monter d'une manière fixe le premier élément (64; 130) sur ladite plaque (10) de coeur de telle façon que le premier élément dépasse de la plaque de soeur jusque dans ledit espace et que son canal (87) de doigt de gant soit aligné axialement avec le passage (26) de la plaque de coeur; et
    (B) un second élément (98; 134) à travers lequel s'étend un canal (113) de doigt de gant et qui comporte un moyen de liaison (100) pour relier d'une façon amovible le second élément (98; 134) audit premier élément (64; 130) de telle sorte qu'il forme un prolongement axial de celui-ci et que son canal (113) de doigt de gant soit aligné axialement avec le canal (87) de doigt de gant du premier élément, ledit second élément (98; 134) ayant une dimension axiale faisant que son extrémité distale est axialement espacée dudit orifice (22) de l'embout inférieur d'une distance prédéterminée quand l'agencement de guidage de doigt de gant est monté sur la plaque (10) de coeur.

2. Agencement de guidage de doigt de gant selon la revendication 1, caractérise en ce que ladite distance prédéterminée est sensiblement comprise entre 0,64 cm et 2,54 cm.

3. Agencement de guidage de doigt de gant selon la revendication 1 ou 2, caractérisé en ce que ledit passage (26) à travers la plaque (10) de coeur a une région filetée (28), et ledit moyen de liaison (68) du premier élément (64; 130) comporte une partie filetée de ce dernier conçue pour se visser avec ladite région filetée (28) du passage (26).

4. Agencement de guidage de doigt de gant selon la revendication 3, caractérisé en ce que ledit premier élément (64; 130) a une autre partie filetée (86) pouvant coopérer avec le moyen de liaison (100) du second élément (98; 134), ledit moyen de liaison (100) du second élément comportant une partie filetée de ce dernier conçue pour se visser avec ladite autre partie filetée du premier élément.

5. Agencement de guidage de doigt de gant selon la revendication 4, caractérisé en ce que les parties filetées (68, 86) du premier élément sont filetées dans des directions mutuellement opposées.

6. Agencement de guidage de doigt de gant selon l'une quelconque des revendications précédentes, caractérisé en ce que sur lesdits premier et second éléments (64,98; 130,134) sont formées des régions (84,108; 132,136) d'engagement d'outils conçues pour que des outils de rotation s'y engagent.

7. Agencement de guidage de doigt de gant selon l'une quelconque des revendications précédentes, caractérisé en ce que ledit premier élément (64; 130) comprend une partie formant manchon (70) qui constitue un prolongement axial tubulaire du premier élément d'une longueur suffisante pour s'étendre à travers ledit passage (26) de la plaque (10) de coeur.

8. Agencement de guidage de doigt de gant selon la revendication 7, caractérisé en ce que ladite partie formant manchon (70) dépasse dudit passage (26) et s'étend jusque dans une chaîne de mesure (42) montée sur le fond, fixée à la plaque (10) de coeur et communiquant avec ledit passage.

9. Agencement de guidage de doigt de gant selon la revendication 7 ou 8, caractérisé en ce que ladite partie formant manchon (70) a un diamètre extérieur plus petit que le diamètre intérieur dudit passage (26) à travers la plaque de coeur, et a au moins un épaulement annulaire (72,74) formé sur son pourtour extérieur et dimensionné pour venir contre la paroi dudit passage (26).

10. Agencement de guidage de doigt de gant selon la revendication 9, caractérisé en ce que ladite partie formant manchon (70) a deux épaulements (72, 74) formés sur son pourtour extérieur, mutuellement espacés axialement et dimensionnés pour venir contre la paroi dudit passage (26).

11. Agencement de guidage de doigt de gant selon l'une quelconque des revendications précédentes, caractérisé en ce que ledit premier élément a une gorge annulaire (82) formée dans son pourtour extérieur, et en ce qu'audit second élément est fixé un collier (102) à ressort conçu pour s'enclencher dans ladite gorge annulaire (82) lors du raccordement du second élément au premier élément.

12. Agencement de guidage de doigt de gant selon la revendication 11, caractérisé en ce que ledit premier élément (64; 130) a une autre gorge annulaire (80) formée dans son pourtour extérieur et auquel correspond un autre collier élastique (88; 114; 122) fixé à ladite plaque (10) de coeur et conçu pour s'enclencher d'une façon séparable dans ladite autre gorge annulaire (80) quand le premier élément est monté sur la plaque de coeur.

13. Agencement de guidage de doigt de gant selon l'une quelconque des revendications précédentes, caractérisé en ce que ledit second élément (98; 134), à son extrémité distale, est conique et se termine par une lèvre annulaire plate (112; 138) s'étendant dans un plan perpendiculaire à l'axe longitudinal du canal (113) de chaussette à travers le second élément.

**Patentansprüche**

1. Führungseinheit (62; 128) für einen Sondenfinger zur Aufnahme eines länglichen Sondenfingers, der in ein Kernbrennelement (14) eingefügt ist durch einen Durchlaß (26) in einer das Brennelement tragenden Reaktorkernplatte (10), durch einen Abstand zwischen der Kernplatte und einem Fußstück (16) des Brennelementes und durch eine Öffnung (22), die im Fußstück in axialer Ausrichtung mit dem Durchlaß in der Kernplatte ausgebildet ist, gekennzeichnet durch

(A) ein längliches erstes Element (64; 130), das einen sich axial durch dieses erstreckenden Sondenfingerkanal (87) aufweist und ein Verbindungsmittel (68) zum festen Anordnen des ersten Elementes (64; 130) an der Kernplatte (10) enthält, so daß das erste Element von der Kernplatte in den Abstand vorragt und seinen Sondenfingerkanal (87) mit dem Durchlaß (26) in der Kernplatte axial ausgerichtet hat; und

(B) ein zweites Element (98; 134), das einen sich axial durch dieses erstreckenden Sondenfingerkanal (113) aufweist und ein Verbindungsmittel (100) zum lösbaren Verbinden des zweiten Elementes (98; 134) mit dem ersten Element (64; 130) enthält, so daß es eine axiale Verlängerung von diesem bildet und sein Sondenfingerkanal (113) in axialer Ausrichtung mit dem Sondenfingerkanal (87) des ersten Elementes ist, wobei das zweite Element (98; 134) eine solche axiale Abmessung aufweist, daß sein distales Ende in axialer Richtung von der Öffnung (22) des Fußstückes einen vorbestimmten Abstand aufweist, wenn die Führungseinheit für einen Sondenfinger an der Kernplatte (10) befestigt ist.

2. Führungseinheit für einen Sondenfinger gemäß Anspruch 1, dadurch gekennzeichnet, daß der vorbestimmte Abstand im wesentlichen zwischen 0,64 cm und 2,54 cm liegt.

3. Führungseinheit für einen Sondenfinger gemäß Anspruch 1 oder 2, dadurch gekennzeichnet, daß der Durchlaß (26) durch die Kernplatte (10) einen Gewindebereich (28) aufweist und das Verbindungsmittel (68) des ersten Elementes (64; 130) einen Gewindeteil aufweist, der für eine Schraubverbindung mit dem Gewindebereich (28) des Durchlasses (26) geeignet ist.

4. Führungseinheit für einen Sondenfinger gemäß Anspruch 3, dadurch gekennzeichnet, daß das erste Element (64; 130) einen zusätzlichen Gewindeteil (86) zum Zusammenwirken mit dem Verbindungsmittel (100) des zweiten Elementes (98; 134) aufweist, wobei das Verbindungsmittel (100) des zweiten Elementes einen Gewindeteil des letzteren umfaßt, der für eine Schraubverbindung mit dem zusätzlichen Gewindeteil des ersten Elementes geeignet

5. Führungseinheit für einen Sondenfinger gemäß Anspruch 4, dadurch gekennzeichnet, daß die Gewindeteile (68, 86) des ersten Elementes in bezug zueinander entgegengesetzte Gewinderichtungen aufweisen.

6. Führungseinheit für einen Sondenfinger gemäß einem der vorhergehenden Ansprüche, dadurch gekennzeichnet, daß die ersten und zweiten Elemente (64,98; 130,134) Bereiche (84,108; 132,136) für einen Werkzeugeingriff ausgebildet haben, die für einen Eingriff mit Werkzeugen zum Drehen geeignet sind.

7. Führungseinheit für einen Sondenfinger gemäß einem der vorhergehenden Ansprüche, dadurch gekennzeichnet, daß das erste Element (64; 130) einen Büchsenteil (70) enthält, der eine rohrförmige axiale Verlängerung des ersten Elementes von ausreichender Länge zum Erstrecken durch den Durchlaß (26) in der Kernplatte (10) bildet.

8. Führungseinheit für einen Sondenfinger gemäß Anspruch 7, dadurch gekennzeichnet, daß der Büchsenteil (70) aus dem Durchlaß (26) hervorragt und sich in einen am Boden befestigten Meßgeräteständer (42) erstreckt, der an der Kernplatte (10) befestigt ist und mit dem Durchlaß in Verbindung steht.

9. Führungseinheit für einen Sondenfinger gemäß Anspruch 7 oder 8, dadurch gekennzeichnet, daß der äußere Durchmesser des Büchsenteiles (70) kleiner ist als der innere Durchmesser des Durchlasses (26) durch die Kernplatte, und daß der Büchsenteil (70) wenigstens eine ringförmige Schulter (72,74) aufweist, die an seinem äußeren Umfang ausgebildet ist und deren Abmessung ein Zusammenwirken mit der Wand des Durchlasses (26) gestattet.

10. Führungseinheit für einen Sondenfinger gemäß Anspruch 9, dadurch gekennzeichnet, daß der Büchsenteil (70) zwei ringförmige Schultern (72,74) aufweist, die an seinem äußeren Umfang mit axialem Abstand zueinander ausgebildet sind und deren Abmessungen ein Zusammenwirken mit der Wand des Durchlasses (26) gestatten.

11. Führungseinheit für einen Sondenfinger gemäß einem der vorhergehenden Ansprüche, dadurch gekennzeichnet, daß das erste Element eine in seinem äußeren Umfang ausgebildete ringförmige Nut (82) aufweist und daß das zweite Element eine daran befestigte federnde Klemme (102) aufweist, die sich mit der ringförmigen Nut (82) beim Verbinden des zweiten Elementes mit dem ersten Element verriegeln kann.

12. Führungseinheit für einen Sondenfinger gemäß Anspruch 11, dadurch gekennzeichnet, daß das erste Element (64; 130) eine zusätzliche, in seinem äußeren Umfang ausgebildete ringförmige Nut (80) und dieser zugeordnet eine zusätzliche federnde Klemme (88; 114; 122) aufweist, die an der Kernplatte (10) befestigt ist und zum trennbaren Verriegeln mit der zusätzlichen ringförmigen Nut (80) geeignet ist, wenn das erste Element an der Kernplatte befestigt ist.

13. Führungseinheit für einen Sondenfinger gemäß einem der vorhergehenden Ansprüche, dadurch gekennzeichnet, daß das zweite Element (98; 134) an seinem distalen Ende abgeschrägt ist und in einer flachen ringförmigen Lippe (112; 138) endet, die sich senkrecht zu der Längsachse des Sondenfingerkanals (113) durch das zweite Element erstreckt.

FIG. I.
(PRIOR ART)

# FIG. 2.

**FIG. 3.**

88
90
96
94

**FIG. 4.**

114
120
120
118
116

**FIG. 5.**

122
128
126
128
124

**FIG. 6.**

102
106

**FIG. 7.**

128
130
132
134
136
138
140